# EUROPEAN PATENT APPLICATION

(11) **EP 2 530 812 A1**
(43) Date of publication of application: **05.12.2012**
(21) Application number: 11737004.9
(22) Date of filing: 26.01.2011
(51) Int. Cl.: H02J 17/00, B60L 11/18, H02J 7/00

(54) **NON-CONTACT POWER TRANSMISSION SYSTEM**

(30) Priority: 24.01.2011 JP 2011011631; 26.01.2010 JP 2010014357
(71) Applicant: Equos Research Co., Ltd., Chiyoda-ku Tokyo 101-0021 (JP)
(72) Inventor: ITO Yasuo, Tokyo 101-0021 (JP)
(74) Representative: TBK
(86) International application number: PCT/JP2011/051385
(87) International publication number: WO 2011/093291

(57) **Abstract**

Provided is a non-contact power transmission system wherein, when transmitting power, it is possible to effectively perform non-contact power transmission by means of a series of power transmitting sequences which begins with recognizing and setting the power transmitting conditions, then with beginning the power transmission, and ends with completing the power transmission. Disclosed is a system for transmitting power in a non-contact manner to devices, such as vehicles, that use electric energy as the power source, which is provided with a power reception side antenna that is mounted on the device and that receives the power, and a transmission side antenna that sends power to the power reception side antenna. When AC electric power which vibrates at a resonation frequency is being transmitted between the antennae by means of electromagnetic coupling, once it is detected that the power reception side antenna is located within an area in which the power transmission side antenna can feed power, power begins to be transmitted, and once the power source mounted on the device, which is being charged by means of the power being transmitted, finishes charging, the transmission of power stops.

## Description

### TECHNICAL FIELD

The technology disclosed herein relates to non-contact transmission of electricity to a device that utilizes electric energy as a power source.

### BACKGROUND ART

In recent years, electric vehicles that generate a drive force through an electric motor using electric energy as a power source and so-called hybrid automotive vehicles that generate a drive force through cooperation between an internal combustion engine and an electric motor have been developed and put into practical use as new technologies for driving automotive vehicles.

Electric energy is accumulated in a vehicle through an electricity accumulation device mounted on the vehicle. A rechargeable secondary battery such as a nickel-hydrogen battery or a lithium-ion battery is used in the electricity accumulation device. In general, the secondary battery is charged with electricity transmitted from an electric power source external to the vehicle. Electricity may be transmitted through a cable that connects between the electric power source external to the vehicle and the electricity accumulation device including the secondary battery, or in a non-contact manner. The latter, non-contact electricity transmission has been drawing attention.

As a technique for transmitting electricity for charge to an electric vehicle from an electric power source external to the vehicle in a non-contact manner, an electricity supply device for a vehicle including a high-frequency power driver, a primary coil, and a primary self-resonant coil is disclosed. Electric power from the electric power source is converted by the high-frequency power driver into high-frequency power, which is fed to the primary self-resonant coil by the primary coil. The primary self-resonant coil is magnetically coupled with a secondary self-resonant coil provided in the vehicle so that electric power is transmitted to the vehicle in a non-contact manner (Patent Document 1).

Technologies for non-contact electricity transmission utilizing coils or antennas are disclosed in Patent Document 2 and Non-Patent Document 1.

### Related-Art Documents

### Patent Documents

Patent Document 1: Japanese Patent Application Publication No. 2009-106136
Patent Document 2: Published Japanese Translation of PCT Application No. 2009-501510

### Non-Patent Documents

Non-Patent Document 1: Aristeidis Karalis and two others, "Efficient wireless non-radiative mid-range energy transfer", [online], April 27, 2007, Annals of Physics 323 (2008) p.34-48, [found November 20, 2009], Internet <URL:www.sciencedirect.com>

### SUMMARY OF THE INVENTION

### Problem to be Solved by the Invention

However, the technologies described in BACKGROUND ART merely provide examples of circuitry for transmitting electric power in a non-contact manner through coils or antennas. The related technologies do not disclose at all an electricity transmission sequence for performing electricity transmission that starts with recognition and setting of electricity transmission conditions and that is performed from the start to the termination of the electricity transmission. The circuitry for non-contact electricity transmission, when driven on the basis of an accurate electricity transmission sequence, enables efficient electricity transmission.

The technology disclosed herein has been proposed in view of the foregoing issue, and an object thereof is to provide a non-contact electricity transmission system that can suitably execute non-contact electricity transmission on the basis of an electricity transmission sequence for performing electricity transmission that starts with recognition and setting of electricity transmission conditions and that is performed from the start to the termination of the electricity transmission.

### Means for Solving the Problem

A non-contact electricity transmission system according to the technology disclosed herein is a non-contact electricity transmission system that transmits electricity in a non-contact manner to a device that utilizes electric energy as a power source. The system is characterized by including: a reception-side antenna mounted on the device to receive electricity through electromagnetic coupling; a transmission-side antenna that transmits electricity to the reception-side antenna through the electromagnetic coupling; an AC power driver connected to the transmission-side antenna, the AC power driver being configured to supply AC power at a predetermined frequency during electricity transmission and to supply AC power while performing frequency scanning prior to the electricity transmission; and a detection circuit that detects reflection characteristics of a system including the AC power driver and the transmission-side antenna and the reception-side antenna while the AC power driver is performing the frequency scanning. The predetermined frequency is defined as a resonance frequency at which the reflection characteristics detected by the detection circuit are brought into a resonant state.

### Effects of the Invention

With the non-contact electricity transmission system according to the technology disclosed herein, electric power can be supplied efficiently by performing frequency scanning prior to electricity transmission, detecting a resonance frequency on the basis of reflection characteristics detected by the detection circuit which detects reflection characteristics, and supplying from the AC power driver AC power at the resonance frequency.

### BRIEF DESCRIPTION OF THE DRAWINGS

[FIG. 1] FIG. 1 shows a non-contact electricity transmission system.
[FIG. 2] FIG. 2 shows resonance frequencies for electricity transmission operation.
[FIG. 3] FIG 3 shows the characteristics of a standing wave ratio (hereinafter abbreviated as SWR) value obtained when both transmission and reception antennas are located in an electricity supply enabling region and at the same separation distance from each other, showing the dependency of the SWR value on the load resistance.
[FIG. 4] FIG 4 is a circuit block diagram of an electricity transmission device.
[FIG. 5] FIG. 5 is a circuit block diagram of an electricity reception device.
[FIG. 6] FIG. 6 is a flowchart of operation of the electricity transmission device.
[FIG. 7] FIG. 7 is a flowchart of operation of the electricity reception device.
[FIG 8] FIG. 8 shows the frequency characteristics of the SWR value obtained when both the transmission and reception antennas are located in the electricity supply enabling region.
[FIG. 9] FIG. 9 shows the frequency characteristics of the SWR value obtained with only the transmission-side antenna.
[FIG. 10] FIG. 10 is a flowchart of frequency scanning performed by the electricity transmission device.

### MODES FOR CARRYING OUT THE INVENTION

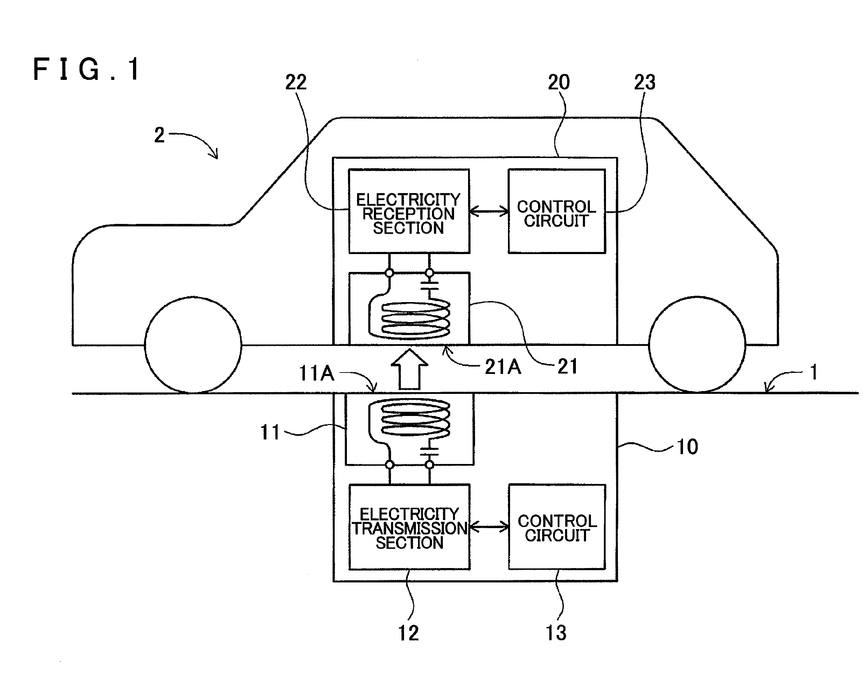

FIG. 1 shows a system configuration in which a non-contact electricity transmission system is applied to transmission of electricity to an electric vehicle or a hybrid vehicle. A vehicle 2 is an electric vehicle or a hybrid vehicle. FIG 1 shows a state in which the vehicle 2 is put in an electricity transmission area 1. In the electricity transmission area 1, an electricity transmission device 10 is buried underground, and transmits electricity in a non-contact manner to an electricity reception device 20 mounted on the vehicle 2.

In non-contact electricity transmission, electric power is transmitted through electromagnetic coupling due to electromagnetic waves from a transmission-side antenna 11 of the electricity transmission device 10 to a reception-side antenna 21 of the electricity reception device 20. A coupling surface 11A of the transmission-side antenna 11 for electromagnetic coupling is disposed along the ground surface of the electricity transmission area 1. A coupling surface 21A of the reception-side antenna 21 for electromagnetic coupling is disposed along the lower surface of the vehicle 2. The transmission-side antenna 11 is driven by an electricity transmission section 12 including an AC power driver that transmits AC power at a predetermined frequency. The electricity transmission section 12 is controlled by a control circuit 13. The AC power received by the reception-side antenna 21 is rectified by an electricity reception section 22 to be accumulated in a battery or the like. The electricity reception section 22 is controlled by a control circuit 23.

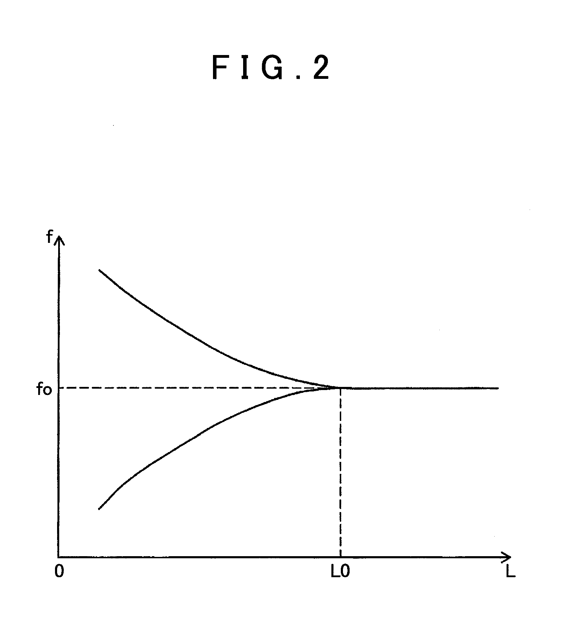

Here, the predetermined frequency of the AC power transmitted from the AC power driver of the electricity transmission section 12 to the transmission-side antenna 11 is the resonance frequency of a system including the transmission-side antenna 11 and the reception-side antenna 21. FIG 2 shows the characteristics of the resonance frequency of the system. The horizontal axis represents the separation distance (L) between the transmission-side antenna 11 and the reception-side antenna 21, and the vertical axis represents the resonance frequency (f). In the region in which the separation distance (L) is equal to or more than L0, the influence of the electromagnetic coupling with the reception-side antenna 21 is ignored. The system does not include the reception-side antenna 21, and resonates at the resonance frequency (f = f0) intrinsic to the transmission-side antenna 11. In the region in which the separation distance (L) is less than L0, the transmission-side antenna 11 and the reception-side antenna 21 are electromagnetically coupled to each other in the system. In the region, the characteristics are affected by the mutual inductance due to the electromagnetic coupling. In the region, resonance frequencies vary depending on the separation distance (L). There are two resonance points across the resonance frequency (f = f0) intrinsic to the transmission-side antenna 11, and the resonance frequencies become more apart from each other as the separation distance (L) becomes shorter. In addition, a high electricity transmission efficiency is obtained at the resonance frequencies in the region.

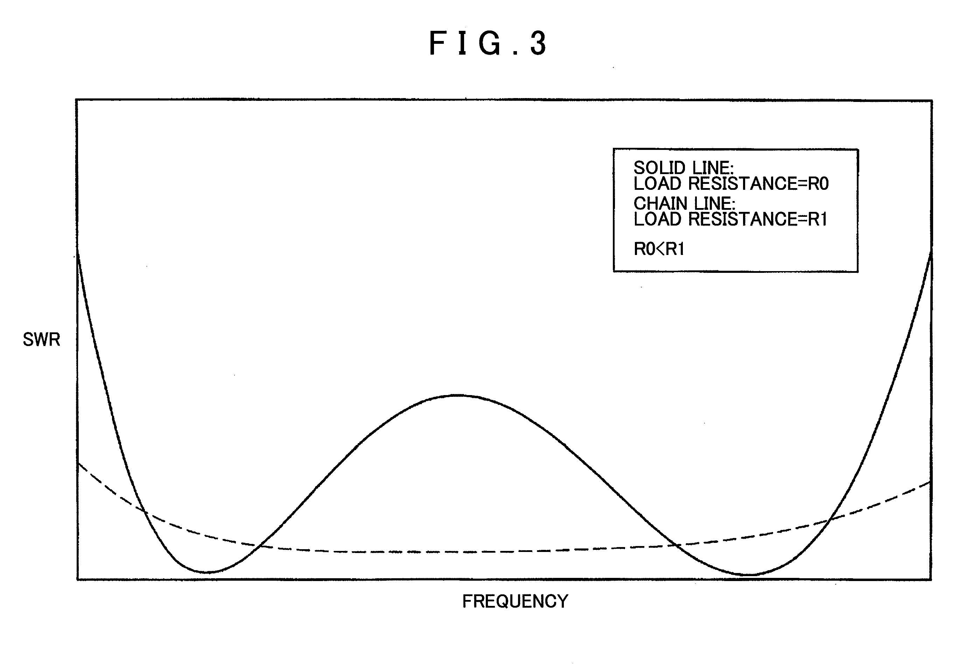

FIG. 3 illustrates the characteristic curves of an SWR value with respect to the frequency during transfer of electric power from the transmission-side antenna 11 to the reception-side antenna 21. The curves in FIG. 2 are obtained by plotting the frequencies at which the SWR value becomes minimum on the characteristic curves in FIG. 3, for example. In the case where the separation distance (L) between the transmission-side antenna 11 and the reception-side antenna 21 is the same, the degree of separation between the values of the resonance frequencies of the system shown in FIG. 2 differs in accordance with the magnitude of the load resistance. That is, as the load resistance becomes smaller (the characteristic curve indicated by the solid line in FIG. 3), the degree of separation becomes larger to approach a predetermined separation distance, which allows accurate detection of the separation distance (L). In the characteristics shown in FIG. 3, as the load resistance becomes larger, the points at which the SWR value becomes minimum become closer to each other, and the peak becomes more obscure. When the load resistance is large, the points at which the SWR value become minimum may not be separated from each other but be converged at one point, as a result of which it may be difficult to detect the separation distance (L) between the transmission-side antenna 11 and the reception-side antenna 21. That is, there may be a case where it may not be determined that the antennas are located in the electricity supply enabling region even though the antennas are actually located in the electricity supply enabling region. In view of the above, in order to accurately detect the separation distance (L) between the transmission-side antenna 11 and the reception-side antenna 21, it is necessary to improve the detection accuracy by bringing the separation distance (L) closer to a predetermined distance by reducing the load resistance as much as possible by bringing the reception-side antenna 21 into a short-circuited (closed loop) state.

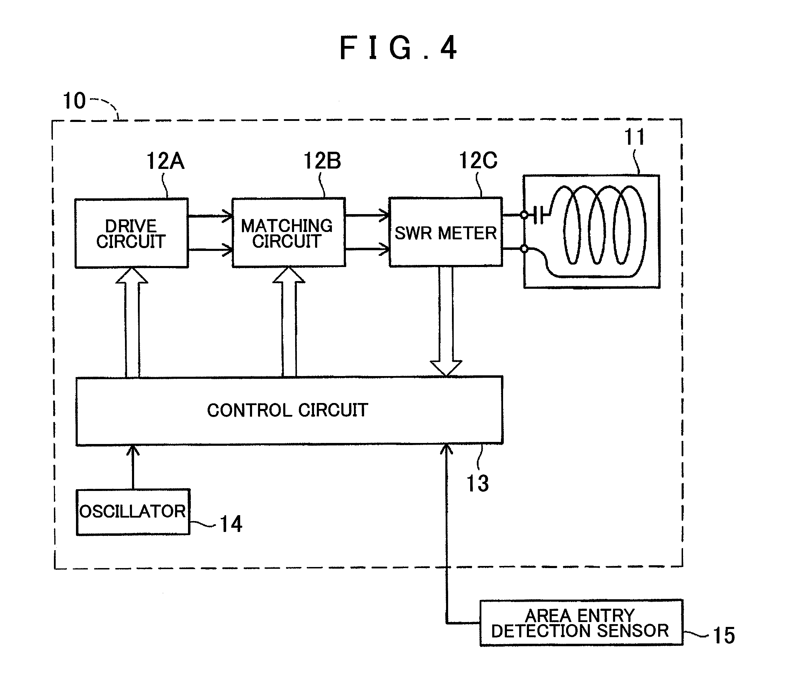

FIG. 4 is a circuit block diagram of the electricity transmission device 10. The electricity transmission device 10 includes the control circuit 13, an oscillator 14, a drive circuit 12A, a matching circuit 12B, an SWR meter 12C, and the transmission-side antenna 11. Further, an area entry detection sensor 15 is provided in the electricity transmission area 1.

A clock signal output from the oscillator 14 is input to the control circuit 13, and used as operation clock in the control circuit 13 and for period control for AC power transmission performed by the drive circuit 12A and so forth.

The control circuit 13 controls the drive circuit 12A and the matching circuit 12B on the basis of signals received from the oscillator 14, the SWR meter 12C, and the area entry detection sensor 15.

The drive circuit 12A includes an AC power driver formed by an inverter, an amplifier, etc., and supplies AC power to the transmission-side antenna 11 through the matching circuit 12B and the SWR meter 12C. The AC power is subjected to period control performed by the control circuit 13 as AC power at a predetermined frequency.

The matching circuit 12B performs impedance matching between the transmission-side antenna 11 and the drive circuit 12A under control by the control circuit 13 in order to efficiently supply the AC power supplied from the drive circuit 12A to the transmission-side antenna 11.

The SWR meter 12C measures the SWR value for the AC power transmitted from the drive circuit 12A to the transmission-side antenna 11, and transmits the measurement results to the control circuit 13. The SWR meter 12C detects the presence or absence of reflected waves due to propagation of the AC power.

The transmission-side antenna 11 is an LC resonant coil having an inductance component and a capacitance component, and is magnetically coupled with the reception-side antenna 21 of the electricity reception device 20 to be discussed later to transmit electric power to the reception-side antenna 21.

The area entry detection sensor 15 detects whether the vehicle 2 has entered the electricity transmission area 1, and transmits the detection results to the control circuit 13.

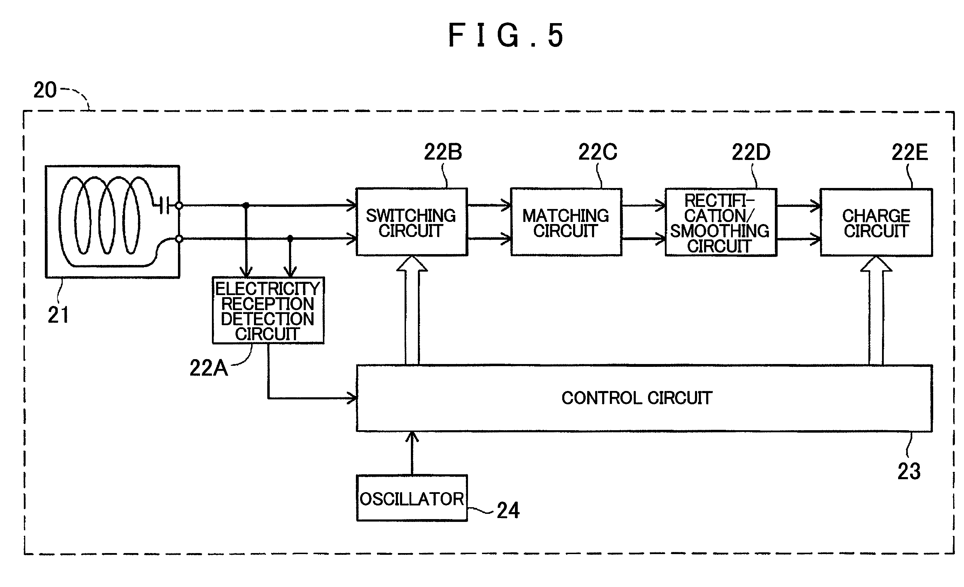

FIG. 5 is a circuit block diagram of the electricity reception device 20. The electricity reception device 20 includes the control circuit 23, an oscillator 24, the reception-side antenna 21, an electricity reception detection circuit 22A, a switching circuit 22B, a matching circuit 22C, a rectification/smoothing circuit 22D, and a charge circuit 22E.

A clock signal output from the oscillator 24 is input to the control circuit 23, and used as operation clock in the control circuit 23.

The control circuit 23 controls the switching circuit 22B and the charge circuit 22E on the basis of signals received from the oscillator 24 and the electricity reception detection circuit 22A.

The electricity reception detection circuit 22A includes a current sensor, for example, and detects a current flowing through the reception-side antenna 21. The electricity reception detection circuit 22A detects whether or not AC power is transmitted from the electricity transmission device 10.

The switching circuit 22B switches the reception-side antenna 21 among a closed loop state, a state of being connected to the charge circuit 22E, and an open loop state in accordance with a signal received from the control circuit 23.

The matching circuit 22C performs impedance matching for the system from the reception-side antenna 21 to the rectification/smoothing circuit 22D such that the AC power received by the reception-side antenna 21 is supplied to the charge circuit 22E through the rectification/smoothing circuit 22D without being reflected.

The rectification/smoothing circuit 22D converts and smoothes the AC power supplied from the reception-side antenna 21 into DC power, and supplies the DC power to the charge circuit 22E.

The charge circuit 22E charges an electricity accumulation device (not shown) such as a battery with the electric power supplied from the rectification/smoothing circuit 22D. Here, the electricity accumulation device may be a secondary battery such as a nickel-hydrogen battery or a lithium-ion battery, or a capacitor with a high capacitance, for example. The charge circuit 22E is controlled by the control circuit 23 to perform charge control.

The reception-side antenna 21 is an LC resonant coil having an inductance component and a capacitance component, and is magnetically coupled with the transmission-side antenna 11 to receive AC power from the transmission-side antenna 11.

Next, operation of the electricity transmission device 10 and the electricity reception device 20 will be described with reference to flowcharts.

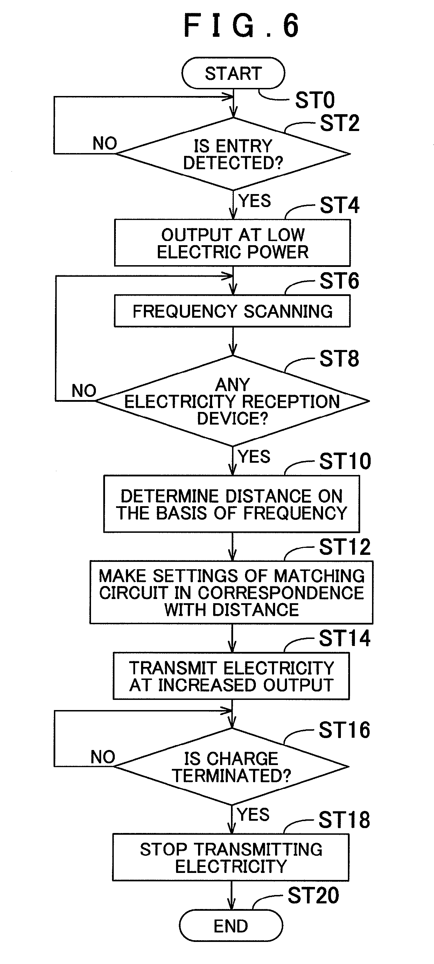

FIG. 6 is a flowchart of operation of the electricity transmission device 10. After operation of the electricity transmission device 10 is started (ST0), the electricity transmission device 10 stands by until the area entry detection sensor 15 detects entry of the electricity reception device 20 (ST2). Because the electricity transmission device 10 stands by until the area entry detection sensor 15 detects entry of the electricity reception device 20 and performs frequency scanning and electricity transmission after the detection of entry of the electricity reception device 20, electric power consumption can be reduced.

After the area entry detection sensor 15 detects entry of the electricity reception device 20, the drive circuit 12A starts outputting a current at such low electric power that allows a current to flow through the reception-side antenna 21 on the electricity reception side (ST4), and maintains the output at the low electric power until electricity transmission is performed (ST8). This enables a reduction in electric power consumption.

After the start of the current output, the drive circuit 12A performs scanning over the frequency of the output electric power under control by the control circuit 13 (ST6). The characteristics of the frequency of the output electric power and the SWR value can be obtained by measuring the SWR value using the SWR meter 12C while scanning over the frequency. Here, the frequency at which the SWR value becomes minimum is a resonance frequency.

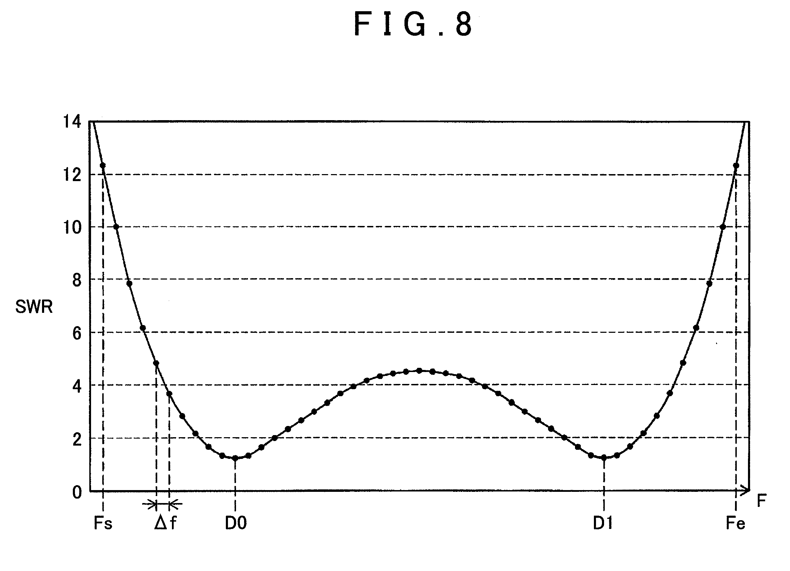

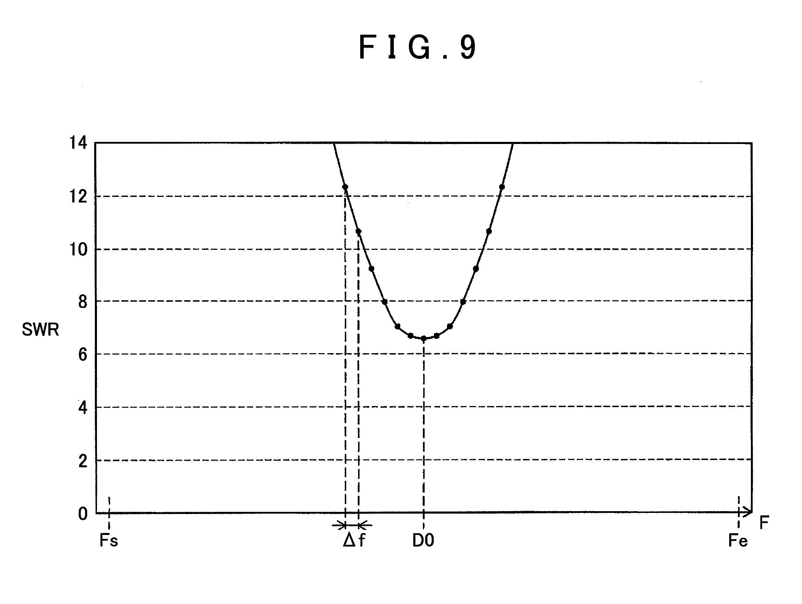

Scanning over the output frequency is performed until two resonance frequencies are detected (ST8: NO). In the case where two resonance frequencies are identified, it is confirmed that the reception-side antenna 21 exists in the electricity supply enabling region of the transmission-side antenna 11 (ST8: YES). FIG. 8 shows the frequency characteristics of the SWR value obtained when the reception-side antenna 21 exists in the electricity supply enabling region of the transmission-side antenna 11. In the case where there exists only one resonance frequency, it may be considered that the reception-side antenna 21 does not exist in the electricity supply enabling region of the transmission-side antenna 11. FIG. 9 shows the frequency characteristics of the SWR value obtained with only the transmission-side antenna. In the case where the reception-side antenna 21 exists in the electricity supply enabling region of the transmission-side antenna 11, electricity transmission is performed at one of the two resonance frequencies (ST8). Operation of the frequency scanning will be discussed in detail later.

Further, the distance between the transmission-side antenna 11 and the reception-side antenna 21 is obtained (ST10) from the characteristics of the distance between the transmission-side antenna 11 and the reception-side antenna 21 and the resonance frequencies (FIG. 2).

The control circuit 13 makes settings of the matching circuit 12B in correspondence with the distance between the antennas (ST12). Then, the drive circuit 12A increases its output under control by the control circuit 13 in order to transmit electricity from the electricity transmission device 10 to the electricity reception device 20 (ST14).

After charge is finished, the electricity reception device 20 opens the loop of the reception-side antenna 21. This causes variations in SWR value measured by the SWR meter 12C of the electricity transmission section, which allows detection of completion of the charge of the electricity reception device 20. This allows the electricity transmission section to detect termination of the charge (ST16: YES). After the termination of the charge is detected, the control circuit 13 of the electricity transmission device 10 stops the output of the drive circuit 12A (ST18). Operation of the electricity transmission section is thus terminated (ST20).

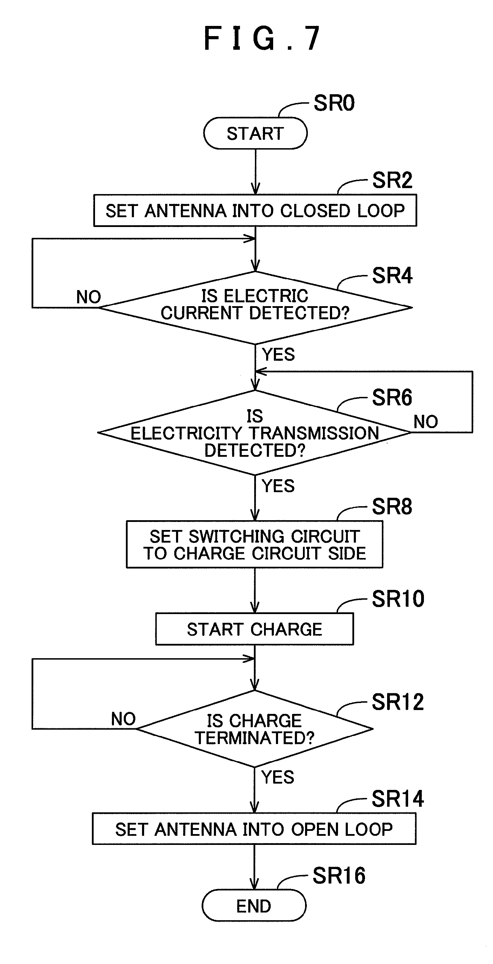

FIG. 7 is a flowchart of operation of the electricity reception device 20. At the start of operation (SR0), the switching circuit 22B of the electricity reception device 20 connects to bring the reception-side antenna 21 into a closed loop state (SR2). This allows accurate detection of the impedance of the transfer path compared to a case where the reception-side antenna 21 is connected to the charge circuit 22E, and allows more accurate estimation of the separation distance (L) between the transmission-side antenna 11 and the reception-side antenna 21 based on the detected information. Because the operation consumes very low electric power, electric power consumption can be reduced. The electricity reception detection circuit 22A stands by until electric power is supplied from the electricity transmission device 10 and electric current flows through the reception-side antenna 21 (SR4).

After electric current flows through the reception-side antenna 21, the electricity reception detection circuit 22A stands by until a significant increase in electric current flowing through the reception-side antenna 21 is detected, that is, until electricity transmission is detected (SR6: NO). After electricity transmission is detected (SR6: YES), the control circuit 23 of the electricity reception device 20 controls the switching circuit 22B so as to connect from the reception-side antenna 21 to the charge circuit 22E (SR8).

The charge circuit 22E connected to the reception-side antenna 21 starts charging the battery (SR10). This state is retained until the charge of the battery is terminated (SR12: NO). When the charge of the battery is terminated (SR12: YES), the control circuit 23 controls the switching circuit 22B so as to disconnect between the reception-side antenna 21 and the charge circuit 22E and then open the loop of the reception-side antenna 21 (SR14). This reduces electric power consumption after the termination of electricity reception. Operation of the electricity reception section is thus terminated (SR16).

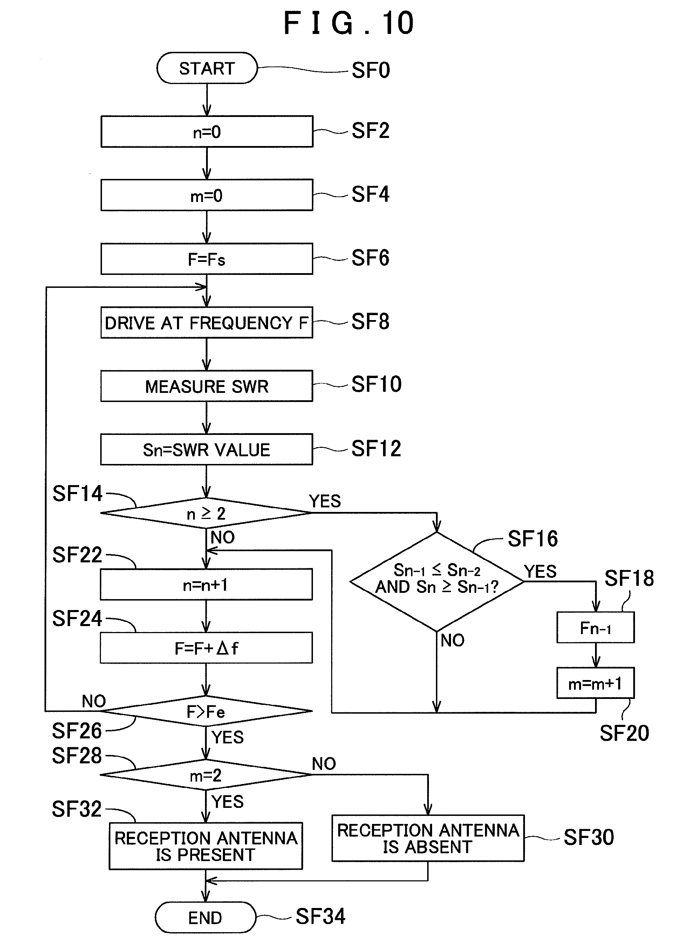

FIG. 10 is a flowchart of the frequency scanning performed by the drive circuit 12A. In the frequency scanning, the output frequency F of the drive circuit 12A is consecutively increased, each time by a frequency increment Δf, from an initial frequency Fs to a final frequency Fe.

When operation of the drive circuit 12A is started (SF0), initial settings are made. A counter n is set to 0 (SF2). A counter m is set to 0 (SF4). The output frequency F is set to the initial frequency Fs (SF6). The initial settings are thus terminated. Now, looped operation in which the value of the counter n is incremented by 1 for each loop and in which the output frequency F is incremented by Δf for each loop is started (SF8 to SF26).

The drive circuit 12A outputs AC power at the output frequency F (SF8). The SWR meter measures the SWR value (SF10). The obtained SWR value is stored as an SWR value Sn for the n-th looped operation (SF12).

When the counter n is 2 or more (SF14: YES), a comparison is made between the SWR value Sn for the n-th looped operation and the SWR value Sn-1 for the (n-1)-th looped operation, and between the SWR value Sn-1 for the (n-1)-th looped operation and the SWR value Sn-2 for the (n-2)-th looped operation (SF16). When the SWR value Sn-1 is smaller than the SWR value Sn-2 and the SWR value Sn is larger than the SWR value Sn-1 (SF16: YES), the SWR value becomes minimum around the output frequency Fn-1 for the (n-1)-th looped operation. That is, it may be considered that the output frequency Fn-1 for the (n-1)-th looped operation is close to a resonance frequency. Thus, the output frequency Fn-1 for the (n-1)-th looped operation is stored as a resonance frequency Dm (SF18), and the value of the counter m is incremented by 1 (SF20). After that, the operation proceeds to process (SF22). Here, in at least one of the cases where the SWR value Sn-1 is larger than the SWR value Sn-2 and the SWR value Sn is smaller than the SWR value Sn-1 (SF16: NO), the operation proceeds to process (SF22) without performing processes (SF18) and (SF20).

In process (SF22), the value of the counter n is incremented by 1. The output frequency F is reset to a frequency obtained by adding the frequency increment Δf to the current output frequency F (SF24). In the case where the output frequency F is equal to or less than the final frequency Fe, the operation returns to SF8 (SF26: NO).

In the case where the output frequency F is more than the final frequency Fe (SF26: YES), the frequency scanning is finished, and the operation proceeds to the next process (SF28). The value of the counter m at the time of termination of the frequency scanning indicates the number of resonance frequencies that exist between the frequency band Fs to Fe over which scanning is performed. It is determined on the basis of the value of m whether or not the reception-side antenna 21 exists in the electricity transmission enabling area (SF28).

In the case where the value of the counter m is not 2 (SF28: NO), that is, there exists no or only one resonance frequency, it is determined that the reception-side antenna does not exist in the electricity transmission enabling area (SF30). In the case where the value of the counter m is 2 (SF28: YES), that is, there exist two resonance frequencies, it is determined that the reception-side antenna exists in the electricity transmission enabling area (SF32). The frequency scanning is thus terminated (SF34).

In the case where it is determined that the reception-side antenna exists in the electricity transmission enabling area, electric power can be supplied efficiently by setting the output frequency F of the AC power output from the drive circuit 12A to the resonance frequency D0 or D1.

Here, the drive circuit 12A is an example of an AC power driver. The SWR meter 12C is an example of a detection circuit that detects reflection characteristics.

According to the embodiment, as has been described in detail above, electric power can be automatically supplied for charge from the electricity transmission device 10 to the electricity reception device 20 in the vehicle when entry of the vehicle 2 into the electricity transmission area 1 is detected.

Before electricity transmission is actually performed, scanning is performed at significantly low output over the frequency of the AC power output from the electricity transmission section 12, and resonance frequencies are obtained through measurement performed by the SWR meter. This makes it possible to judge whether or not the reception-side antenna 21 exists in the electricity supply enabling region of the transmission-side antenna 11. Further, electric power can be transmitted efficiently by supplying electric power from the electricity transmission section 12 to the transmission-side antenna 11 at the obtained resonance frequency.

After the area entry detection sensor 15 detects entry of the electricity reception device 20, the drive circuit 12A starts outputting a current at such low electric power that allows a current to flow through the reception-side antenna 21 on the electricity reception side (FIG. 6, ST4), and maintains the output at the low electric power until electricity transmission is performed (FIG 6, ST8). This enables a reduction in electric power consumption.

When the charge of the battery is terminated (FIG. 7, SR12: YES), the control circuit 23 controls the switching circuit 22B so as to disconnect between the reception-side antenna 21 and the charge circuit 22E and then open the loop of the reception-side antenna 21 (FIG. 7, SR14). This reduces electric power consumption after the termination of electricity reception.

At the start of operation (FIG. 7, SR0), the switching circuit 22B of the electricity reception device 20 connects to bring the reception-side antenna 21 into a closed loop state (FIG. 7, SR2). This allows accurate detection of the impedance of the transfer path compared to a case where the reception-side antenna 21 is connected to the charge circuit 22E, and allows more accurate estimation of the separation distance (L) between the transmission-side antenna 11 and the reception-side antenna 21 based on the detected information. Because the operation consumes very low electric power, electric power consumption can be reduced.

After charge is finished, the electricity reception device 20 opens the loop of the reception-side antenna 21. This causes variations in SWR value measured by the SWR meter 12C of the electricity transmission section, which allows detection of completion of the charge of the electricity reception device 20. This allows the electricity transmission section to easily detect termination of the charge (FIG 7, ST16: YES).

After operation of the electricity transmission device 10 is started (FIG. 6, ST0), the electricity transmission device 10 stands by until the area entry detection sensor 15 detects entry of the electricity reception device 20 (FIG. 6, ST2). Because the electricity transmission device 10 stands by until the area entry detection sensor 15 detects entry of the electricity reception device 20 and performs frequency scanning and electricity transmission after the detection of entry of the electricity reception device 20, electric power consumption can be reduced.

It should be understood that the present invention is not limited to the embodiment described above, and that various improvements and changes may be made without departing from the scope and spirit of the present invention.
The device in which electric energy is utilized as a power source needs not be a vehicle as in the embodiment of the present invention, and may be portable devices such as cellular phones, digital cameras, and laptop personal computers, and stationary devices such as television sets, home theater systems, and digital photo frames, for example.
The detection circuit which detects reflection characteristics needs not be an SWR meter as in the embodiment of the present invention, and may be any circuit that can detect the quantity of reflection of AC power such as a circuit that measures the amount of a current supplied from the electricity transmission section 12 to the transmission-side antenna 11 or a circuit that measures the waveform of a supplied voltage, for example.

### Description of the Reference Numerals

- 1: ELECTRICITY TRANSMISSION AREA
- 2: VEHICLE
- 10: ELECTRICITY TRANSMISSION DEVICE
- 11: TRANSMISSION-SIDE ANTENNA
- 11A: COUPLING SURFACE
- 12: ELECTRICITY TRANSMISSION SECTION
- 13,23: CONTROL CIRCUIT
- 12A: DRIVE CIRCUIT
- 12B: MATCHING CIRCUIT
- 12C: STANDING WAVE RATIO (SWR) METER
- 14, 24: OSCILLATOR
- 15: AREA ENTRY DETECTION SENSOR
- 20: ELECTRICITY RECEPTION DEVICE
- 21: RECEPTION-SIDE ANTENNA
- 21A: COUPLING SURFACE
- 22: ELECTRICITY RECEPTION SECTION
- 22A: ELECTRICITY RECEPTION DETECTION CIRCUIT
- 22B: SWITCHING CIRCUIT
- 22C: MATCHING CIRCUIT
- 22D: RECTIFICATION/SMOOTHING CIRCUIT
- 22E: CHARGE CIRCUIT

## Claims

1. A non-contact electricity transmission system that transmits electricity in a non-contact manner to a device that utilizes electric energy as a power source, the non-contact electricity transmission system **characterized by** comprising:
a reception-side antenna mounted on the device to receive electricity through electromagnetic coupling;
a transmission-side antenna that transmits electricity to the reception-side antenna through the electromagnetic coupling;
an AC power driver connected to the transmission-side antenna, the AC power driver being configured to supply AC power at a predetermined frequency during electricity transmission and to supply AC power while performing frequency scanning prior to the electricity transmission; and
a detection circuit that detects reflection characteristics of a system including the AC power driver and the transmission-side antenna and the reception-side antenna while the AC power driver is performing the frequency scanning, wherein
the predetermined frequency is defined as a resonance frequency at which the reflection characteristics detected by the detection circuit are brought into a resonant state.

2. The non-contact electricity transmission system according to claim 1, **characterized in that**
the frequency scanning is performed after entry of the device into an electricity transmission enabling area of the transmission-side antenna is detected.

3. The non-contact electricity transmission system according to claim 1 or 2, **characterized in that**
supply of electric power is started in the case where two resonance frequencies are detected by the detection circuit.

4. The non-contact electricity transmission system according to any one of claims 1 to 3, **characterized in that**
the AC power driver supplies low AC power during the frequency scanning compared to the AC power supplied during the electricity transmission.

5. The non-contact electricity transmission system according to any one of claims 1 to 4, **characterized by** further comprising:
a switching circuit that switches connection of the reception-side antenna, wherein
the switching circuit switches the reception-side antenna to a closed loop including no load during the frequency scanning.

6. The non-contact electricity transmission system according to claim 5, **characterized in that**
the switching circuit switches the reception-side antenna to an open loop when electricity reception is terminated.

7. The non-contact electricity transmission system according to claim 6, **characterized in that**
the detection circuit further detects termination of the electricity reception with the reception-side antenna switched to the open loop when the reflection characteristics are brought out of the resonant state.

8. The non-contact electricity transmission system according to any one of claims 1 to 7, **characterized by** further comprising:
an area entry detection sensor that detects entry of the device into the electricity transmission enabling area.
